# EUROPÄISCHE PATENTANMELDUNG

(11) **EP 3 653 428 A1**
(43) Veröffentlichungstag der Anmeldung: **20.05.2020**
(21) Anmeldenummer: 18207059.9
(22) Anmeldetag: 19.11.2018
(51) Int. Cl.: B60L 3/00, B60L 13/03, B60L 15/00

(54) **VERFAHREN ZUM SICHEREN ÜBERWACHEN DER FUNKTION EINES LANGSTATORLINEARMOTORS**

(71) Anmelder: B&R Industrial Automation GmbH, 5142 Eggelsberg (AT)
(72) Erfinder: Hanis, Gerhard, 4623 Gunskirchen (AT); Mayrhofer, Andreas, 4850 Timelkam (AT)
(74) Vertreter: Patentanwälte Pinter & Weiss OG

(57) **Zusammenfassung**

Um eine sichere Überwachungsfunktion für einen Langstatorlinearmotor zu realisieren ist vorgesehen, dass zumindest ein erster Messwert (m1) eines ersten Sensors (S1) mit einem vorgegebenen Grenzwert (G) verglichen wird, und bei einer Kreuzung des Grenzwerts (G) durch den ersten Messwert (m1) ein Fehler festgestellt und eine Aktion (A) ausgelöst wird.

## Beschreibung

Die gegenständliche Erfindung betrifft ein Verfahren zum sicheren Überwachen der Funktion eines Langstatorlinearmotors, wobei am Langstatorlinearmotor eine Anzahl Sensoren, angeordnet ist und die Anzahl Sensoren jeweils einen Messwert, der zur Steuerung des Langstatorlinearmotor geeignet ist, erfassen. Weiters betrifft die gegenständliche Erfindung einen Langstatorlinearmotor, an dem eine Anzahl Sensoren, angeordnet ist, die mit einer Steuereinheit Langstatorlinearmotors verbunden sind, und ausgestaltet sind einen Messwert des Langstatorlinearmotor zu erfassen und an die Steuereinheit zu übertragen Um den Anforderungen moderner, flexibler Logistikeinheiten gerecht zu werden, werden vermehrt Langstatorlinearmotoren (LLM) als Ersatz für konventionelle Stetigförderer, beispielsweise rotativ-zu-linear Übersetzeinheiten, wie beispielsweise rotative Motoren an einem Förderband, eingesetzt. Langstatorlinearmotoren zeichnen sich durch eine bessere und flexiblere Ausnützung über den gesamten Arbeitsbereich aus. So können die Bereiche der Geschwindigkeit und Beschleunigung von Null bis zum Maximum ausgenutzt werden. Zudem sind eine individuelle Regelung bzw. Steuerung der beweglichen Transporteinheiten (Shuttles), eine verbesserte Energieausnützung, die Reduktion der Wartungskosten aufgrund der geringeren Anzahl an Verschleißteilen, ein einfacher Austausch der Transporteinheiten, ein effizientes Monitoring und eine einfachere Fehlerdetektion, eine Optimierung des aufgenommen Stromes durch Eliminierung von Stromlücken als Vorteile aufzuzählen.

Ein Stator eines Langstatorlinearmotors besteht aus einer Vielzahl von in Bewegungsrichtung der Transporteinheiten nebeneinander angeordneten Antriebspulen. Diese Antriebspulen werden einzeln oder in Gruppen angesteuert, wodurch ein bewegtes Magnetfeld erzeugt wird, welches mit Antriebsmagneten (in der Regel Permanentmagnete) an einer Transporteinheit des LLM zusammenwirkt, um eine Vortriebskraft auf die Transporteinheit zu erzeugen und die Transporteinheit so entlang des Stators zu bewegen.

Da die Antriebsmagnete einer Transporteinheit ein Magnetfeld erzeugen, kann die Position der Transporteinheit durch die Detektion dieses Magnetfelds ermittelt werden. Hierzu können Magnetfeldsensoren, welche beispielsweise auf dem anisotropen magnetoresistiven Effekt (AMR-Effekt) beruhen, im Stator des Langstatorlinearmotors verbaut sein. Durch die Detektion des Magnetfelds kann auf die Position und in weiterer Folge auch auf die Geschwindigkeit der Transporteinheit geschlossen werden kann. Die US 2003/230941 A1 offenbart beispielsweise eine Ermittlung der Geschwindigkeit von Transporteinheiten unter Verwendung von Magnetfeldsensoren.

Die AT 519 238 B1 offenbart eine Positionsermittlung einer Transporteinheit, welche auch bei Stillstand der Transporteinheit funktioniert. Es wird hier ein für eine Transporteinheit charakteristisches Magnetfeld betrachtet und bei einer Initialisierung des Langstatorlinearmotors analoge Sinus- und Cosinus-Signale als Messwerte aufgenommen. Aus den Messwerten kann ein auf den Messsensor einwirkender Magnetfeldwinkel des Magnetfelds berechnet werden. Zudem werden Informationen über den konstruktiven und geometrischen Aufbau der Transporteinheit verwendet um ausgehend von einer ermittelten Grobposition der Transporteinheit auf eine genaue Position bei der Aktivierung/Initialisierung des Langstatorlinearmotors zu schließen.

Es kann für einen Langstatorlinearmotor auch eine Implementierung von Sicherheitsfunktionen erforderlich sein. So muss im laufenden Betrieb ein Fehler oder eine Überschreitung eines vorgegebenen Limits erkannt werden. Daraufhin kann eine sichere Impulssperre STO (Safe torque off) aktiviert werden um einen sicheren Zustand einzuleiten, in welchem zumindest ein Segment des Langstatorlinearmotors kraftfrei geschaltet wird. Es erfolgt dabei üblicherweise keine aktive Bremsung der am Stator befindlichen Transporteinheiten womit Transporteinheiten, welche in Bewegung sind, austrudeln.

Die US 2009/033272 A1 offenbart ein Sicherheitskonzept, welches eine Positionsbestimmung ermöglicht. Dabei ist eine Feedback-Anordnung vorgesehen, welche zusätzliche Magnetfeldsensoren umfasst, welche bei Ausfall der primären Magnetfeldsensoren eine Information über die Position der Transporteinheit liefern. Die US 9,806,647 B2 zeigt ein Sicherheitsmodul, welches separat die Position einer Transporteinheit berechnet und eine Übereinstimmung mit der anhand von Magnetfeldsensoren ermittelten Position überprüft.

Es somit ist eine Aufgabe der gegenständlichen Erfindung eine sichere Überwachungsfunktion für einen Langstatorlinearmotor anzugeben.

Diese Aufgabe wird erfindungsgemäß gelöst, indem zumindest ein erster Messwert eines ersten Sensors mit einem vorgegebenen Grenzwert verglichen wird und bei einer Kreuzung des Grenzwerts durch den ersten Messwert ein Fehler festgestellt und eine Aktion ausgelöst wird.

Die Aufgabe wird ebenso durch eine Auswerteeinheit gelöst, die ausgestaltet ist einen ersten Messwert eines ersten Sensors mit einem vorgegebenen Grenzwert zu vergleichen und bei einer Kreuzung des Messwerts einen Fehler festzustellen und eine Aktion auszulösen. Vorzugweise ist die sichere Auswerteeinheit unabhängig von der Steuerungseinheit ausgeführt.

Es kann somit ein vorhandener Messwert auf Plausibilität geprüft werden. Ein Messwert ist grundlegend zur Steuerung des Langstatorlinearmotors geeignet, was jedoch nicht zwingend bedeutet, dass der Messwert auch für die Steuerung des Langstatorlinearmotors verwendet wird. Die Sensoren des Langstatorlinearmotors können z.B. mit busfähigen Analog-Digital-Wandlern verbunden sein, welche durch einen nicht sicheren Steuerungsteil angesteuert werden. Da in diesem Fall die Messwerte nicht sicher vorliegen, kann durch einen Plausibilitätscheck der Messwerte der Sensoren sichergestellt werden, dass ein Fehler erkannt wird. Da auf den erkannten Fehler in Form einer Aktion reagiert wird, ist eine sichere Steuerung des Langstatorlinearmotors gewährleistet.

Das erfindungsgemäße Verfahren kann für den gesamten Langstatorlinearmotors, aber auch für einen Teil des Langstatorlinearmotors, vorzugsweise ein Segment des Langstatorlinearmotors Anwendung finden.

Durch einen Vergleich des Messwerts mit einem vorgegebenen Grenzwert und dem Feststellen, ob der Messwert den Grenzwert kreuzt und damit verletzt, kann ermittelt werden ob der Messwert plausibel ist, d.h. ob der Messwert während des Betriebs des Langstatorlinearmotors überhaupt auftreten kann. Als Grenzwert kann ein oberer Grenzwert vorgesehen sein, womit bei einer Überschreitung (Kreuzung) des oberen Grenzwerts durch den ersten Messwert ein Fehler festgestellt und eine Aktion ausgelöst wird. Es kann als Grenzwert auch ein unterer Grenzwert vorgesehen sein, womit bei einer Unterschreitung (Kreuzung) des unteren Grenzwerts durch den ersten Messwert ein Fehler festgestellt und eine Aktion ausgelöst wird. Es können natürlich für einen Messwert auch ein oberer und ein unterer Grenzwert vorgesehen sein, die auf Verletzung geprüft werden.

Der vorgegebene Grenzwert kann auf verschiedene Weise vorgegeben werden. So kann der vorgegebene Grenzwert beispielsweise einem festen Wert entsprechen und/oder durch eine übergeordnete Steuerung, z.B. aufgrund einer bestimmten (Sicherheits-)Einstellung vorgegeben werden. Dabei ist der vorgegebene Grenzwert jedoch von betriebsbedingten Grenzwerten zu unterscheiden. Ein betriebsbedingter, bzw. "betriebsnormaler", Grenzwert ergibt sich abhängig vom Betriebszustand des Langstatorlinearmotors. Beispielsweise kann eine Fehlertoleranz eines Messwertes, z.B. eine Schleppfehlerüberwachung als betriebsbedingter Grenzwert angesehen werden. Kreuzt ein Messwert einen betriebsbedingten Grenzwert, so liegt üblicherweise kein Defekt, sondern ein Anwendungsfehler vor. Soll beispielsweise eine Transporteinheit mit 3m/s² beschleunigt werden (betriebsbedingter unterer Grenzwert für den aktuellen Betriebszustand) wobei sich jedoch aufgrund der Auslegung der Leistungselektronik der Steuereinheit lediglich eine Beschleunigung von 2m/s² (Messwert) ergibt, so wird ein Schleppfehler erkannt, da der Messwert sich unter dem unteren Grenzwert befindet. Damit kann beispielsweise ein Anwenderfehler erkannt werden, jedoch nicht auf einen Defekt geschlossen werden.

Dem gegenüber ist ein erfindungsgemäß vorgegebener Grenzwert ein Plausibilitätsgrenzwert, welcher beispielsweise überprüft, dass der Messwert grundlegend, z.B. physikalisch, möglich ist. Der vorgegebene Grenzwert darf bei einer korrekten Funktion des Langstatorlinearmotors durch den Messwert nicht gekreuzt werden. Wird ein vorgegebener Grenzwert gekreuzt, so kann auf einen Defekt im Sensor, der Signalübermittlung, der Auswerteeinheit, etc., geschlossen werden. Wird beispielsweise eine Beschleunigung von 10 m/s² (Messwert) ermittelt, wobei die Transporteinheit maximal eine Beschleunigung von 5 m/2² (vorgegebener Grenzwert) aufweisen kann, so wird erfindungsgemäß ein Fehler erkannt.

Zusammengefasst kann ein Messwert einen betriebsbedingten Grenzwert auch bei ordnungsgemäß funktionierender Hardware kreuzen, wogegen bei Kreuzung eines vorgegebenen Grenzwerts im Sinne der Erfindung (Plausibilitätsgrenzwert) auf einen Hardwarefehler geschlossen werden kann.

Es kann somit für die gegenständliche Erfindung der Messwert erfindungsgemäß mit einem vorgegebenen Grenzwert verglichen werden. Zusätzlich kann der Messwert während des Betriebs natürlich auch auf bekannte Weise mit einem betriebsbedingten Grenzwert verglichen werden.

Wird beispielsweise eine Geschwindigkeit einer Transporteinheit als Messwert ermittelt, so kann eine Maximalgeschwindigkeit, mit der eine Transporteinheit grundlegend maximal bewegt werden kann, festgelegt werden. Überschreitet die Geschwindigkeit als Messwert die Maximalgeschwindigkeit als Grenzwert, so wird ein Fehler erkannt und eine Aktion ausgelöst.

Als Messwerte können Magnetfeldgrößen aufgenommen werden. Damit kann der betreffende Sensor einen Magnetfeldsensor darstellen, welcher eine Eigenschaft eines am Sensor auftretenden Magnetfeldes, beispielsweise die Magnetfeldintensität (z.B. ein Hall-Sensor) oder die Richtung des Magnetfeldes (z.B. ein magnetoresistiver Sensor) misst. Auch Magnetostriktive Sensoren sind als Magnetfeldsensoren möglich.

Der Sensor kann ebenso einen Temperatursensor darstellen und eine Temperatur als Messwert aufnehmen.

Vorteilhafterweise ist der erste Sensor ein Stromsensor. Somit kann ein durch die Antriebsspulen fließender Spulenstrom als Messwert angesehen und mit einem Grenzwert verglichen werden.

Natürlich kann ein Sensor auch mehrere Messwerte liefern, beispielsweise eine Eigenschaft eines Magnetfelds und eine Temperatur. Ein Temperatursensor ist z.B. oftmals in einen Magnetfeldsensor integriert, da die durch den Magnetfeldsensor ermittelten Messwerte oftmals durch die Sensortemperatur beeinflusst werden. Um den Grad der Beeinflussung berücksichtigen zu können kann die Temperatur als weiterer Messwert aufgenommen und verarbeitet werden. Mehrere Messwerte können auch zu einem neuen Messwert kombiniert werden.

Vorteilhafterweise wird eine zeitliche Änderungsrate des ersten Messwerts des ersten Sensors und/oder eine zeitliche Änderungsrate eines weiteren Messwertes eines weiteren Sensors mit einer vorgegebenen maximalen zeitlichen Änderungsrate verglichen. Bei einer Überschreitung der maximalen zeitlichen Änderungsrate wird ein Fehler festgestellt und eine Aktion ausgelöst wird.

Somit wird die Dynamik des Messwerts mit einer maximalen Dynamik als Grenzwert verglichen. Dieser Grenzwert kann beispielsweise vorab aufgrund einer vorgesehenen Abtastrate und/oder einer maximal zu erwarteten Signalfrequenz festgelegt werden.

Es kann beispielsweise für einen Magnetfeldwinkel und/oder ein Magnetfeldbetrag als Messwert eine gewisse Kontinuität angenommen werden. So kann beispielsweise eine zeitliche Änderungsrate des Magnetfeldwinkels und/oder des Magnetfeldbetrags ermittelt, mit einer vorgegebenen maximalen Änderungsrate verglichen, bei Überschreitung ein Fehler festgestellt und eine Aktion ausgelöst werden.

Gleichermaßen kann auch beispielsweise angenommen werden, dass keine Temperaturänderungen über einer gewissen maximalen Änderungsrate auftreten. Wird die Temperatur als Messwert betrachtet, so kann beispielsweise eine Änderungsrate der Temperatur mit einem Maximalwert verglichen, bei Überschreitung ein Fehler festgestellt und eine Aktion ausgelöst werden.

Eine Prüfung der zeitlichen Änderungsrate und Vergleich mit einer vorgegebenen maximalen Änderungsrate kann natürlich für alle Arten an Messwerten erfolgen, z.B. für eine Geschwindigkeit, eine Beschleunigung, etc.

Es kann vorteilhafterweise der erste Messwert des ersten Sensors und/oder ein weiterer Messwert eines weiteren Sensors, mit einem zusätzlichen Messwert eines zusätzlichen Sensors, welcher vorzugsweise angrenzend zum ersten Sensors und/oder weiteren Sensors positioniert ist, verglichen und eine Differenz festgestellt werden. Bei einer Abweichung der festgestellten Differenz von einer vorgegebenen Differenz, vorzugsweise einer vorgegebenen Differenz von Null, wird ein Fehler festgestellt und eine Aktion ausgelöst.

So kann beispielsweise die Temperatur als Messwert eines ersten Sensors mit der Temperatur eines weiteren Sensors als Grenzwert verglichen werden. Je nach Anordnung der Sensoren am Stator kann beispielsweise eine Annahme für die Zusammenhänge der Temperatur des ersten Sensors mit dem weiteren Sensors getroffen werden, wobei die Annahme beispielsweise ähnliche Temperaturen, d.h. eine geringe Differenz, oder keine Differenz, fordert. Bei einer zu großen Abweichung kann auf einen Fehler, z.B. im ersten Sensor oder im weiteren Sensor, geschlossen werden und eine Aktion ausgelöst werden. Ähnliche Annahmen können für andere Messwerte, wie beispielsweise Magnetfeldwerte angenommen werden. So kann angenommen werden, dass insbesondere für angrenzend positionierte Sensoren ein Messwert (z.B. ein Magnetfeldbetrag) keine Abweichung über einer vorgegebenen Toleranz auftritt. Analog kann auch der Magnetfeldwinkel als Messwert eines ersten Sensors mit dem Magnetfeldwinkel eines weiteren Sensors verglichen und eine Differenz festgestellt werden. Diese festgestellte Differenz wird mit einer vorgegebenen Differenz verglichen und bei einer Abweichung ein Fehler festgestellt und eine Aktion ausgelöst.

Vorteilhafterweise wird eine Aktivität des ersten Sensors als erster Messwert bestimmt wird und eine Aktivität des zusätzlichen Sensors als zusätzlicher Messwert bestimmt. Die Aktivitäten sind vorteilhafterweise binär, d.h. es gibt den Status aktiv und inaktiv, wobei die Grenze zwischen aktiv und inaktiv beispielsweise durch eine vorgegebene Magnetfeldstärke dargestellt werden kann. Die auftretende Aktivität zweier Sensoren kann somit mit vorgegebenen Mustern verglichen werden. Als vorgegebene Differenz kann entsprechend des vorgegebenen Musters eine Übereinstimmung der Aktivität oder eine gegensätzliche Aktivität angesehen werden um einen Plausibilitätscheck bezüglich der Aktivität der betrachteten Sensoren durchzuführen. Als Aktion kann die Ausgabe eines optischen und/oder akustischen Warnsignals, ein Eingreifen in die Steuerungseinheit vorgesehen sein. So kann beispielsweise ein Auslösen einer Impulssperre (STO), etc., durchgeführt werden.

Durch einen Vergleich der Messwerte untereinander kann sichergestellt werden, dass die Messwerte sicher sind. "Sicher" kann nach einer Kategorie der Tabelle 10 der Norm DIN EN ISO 13849-1:2016-06 festgelegt werden und somit je nach Sicherheitskategorie eine Einfehlersicherheit, eine Zweifehlersicherheit, etc. vorgesehen sein kann. Natürlich können aber auch Sensoren verwendet werden, die bereits einer Sicherheitskategorie entsprechen, wobei zusätzlich die Messwerte erfindungsgemäß ausgewertet werden. Es kann beispielsweise auch die Ansteuerung der Analog-Digital-Wandler der Steuereinheit überwacht werden, wobei die Taktfrequenz und/oder die Anzahl der Takte der Wandlung, die Häufigkeit eines Starts der Wandlung, etc. betrachtet werden kann. Es können vorteilhafterweise die Messwerte aller Sensoren des Langstatorlinearmotors mit einem vorgegebenen Grenzwert geprüft werden und/oder die Änderungsraten der Messwerte aller Sensoren mit einer maximalen zeitlichen Änderungsrate verglichen werden und/oder die Messwerte aller Sensoren mit den zusätzlichen Messwerten anderer Sensoren verglichen werden.

Damit kann auf unterschiedliche Weise sichergestellt werden, dass alle Messwerte des Langstatorlinearmotors plausibel sind, auf Fehler geschlossen werden und eine Aktion ausgelöst werden.

Vorteilhafterweise ist eine Transporteinheit in einer Bewegungsrichtung entlang einer Transportstrecke bewegbar angeordnet, wobei eine an der Transporteinheit in Bewegungsrichtung angeordnete Mehrzahl an Antriebsmagneten ein Magnetfeld an der Transportstrecke erzeugt. Der Messwert zumindest eines Sensors ist weiters von der Position und/oder der Geschwindigkeit und/oder der Beschleunigung der Transporteinheit an der Transportstrecke abhängig.

Liefert der Sensor direkt die Position, bzw. Geschwindigkeit, bzw. Beschleunigung als sicheren Messwert, so kann eine sichere Position bzw. sichere Geschwindigkeit, bzw. sichere Beschleunigung gebildet werden. In diesem Fall kann ein Sensor einen "sicheren" Messwert liefern. Um die sichere Position, bzw. Geschwindigkeit, bzw. Beschleunigung zu erhalten, kann es je nach Sicherheitsvorgaben auch erforderlich sein, dass die gesamte Kette der Auswertung der Messwerte vom Sensor bis zu den verarbeitenden Prozessoren sicher ist, um auch eine sichere Kommunikation zwischen den jeweiligen Komponenten sicherzustellen. Als entsprechende Sensoren sind somit jegliche Sensoren vorstellbar, die ein Signal proportional zur Position, bzw. Geschwindigkeit, bzw. Beschleunigung der Transporteinheit liefern. So können optische Sensoren, Hallsensoren, Lichtschranken, etc. oder Sensoren zur Ausnutzung des Doppler-Effekts, wie Radarsensoren, Lasersensoren, Schallsensoren, etc. vorgesehen sein.

Es kann aber auch aus dem sicheren Messwert eine sichere Position und/oder eine sichere Geschwindigkeit und/oder eine sichere Beschleunigung der Transporteinheit ermittelt werden. Als sichere (Grob-)Position kann auch die bloße Anwesenheit einer Transporteinheit auf der Transportstrecke angesehen werden.

Somit kann auch beispielsweise unter Verwendung eines Magnetfeldsensors als Sensor eine Position ermittelt werden. Eine sichere Geschwindigkeit der Transporteinheit kann auch aus der sicheren Position, bzw. aus dem zeitlichen Verlauf z.B. durch zeitliche Ableitung, der sicheren Position ermittelt werden. Gleichermaßen kann eine sichere Beschleunigung aus der sicheren Geschwindigkeit, bzw. dem zeitlichen Verlauf der sicheren Geschwindigkeit ermittelt werden.

Eine Ermittlung der sicheren Position und/oder der sicheren Geschwindigkeit und/oder der sicheren Beschleunigung kann in zumindest zwei redundanten Berechnungspfaden erfolgen. Damit werden in jedem redundanten Berechnungspfad separat Prüfungen und Berechnungen zur Ermittlung der sicheren Position bzw. sicheren Geschwindigkeit, bzw. sicheren Beschleunigung der Transporteinheit durchgeführt. Die redundanten Berechnungspfade können durch entsprechende redundante, z.B. parallel angeordnete Berechnungseinheiten realisiert werden.

Damit kann die Auswerteeinheit ebenso sicher gestaltet sein. Kann aus dem Messwert, bzw. den Messwerten keine sichere Position bzw. Geschwindigkeit, bzw. Beschleunigung ermittelt werden, so wird ein Fehler bei der Berechnung erkannt, woraufhin eine Aktion entsprechend einer Sicherheitsfunktion ausgelöst werden kann. Als Aktion kann wiederum die Ausgabe eines Warnsignals, ein Auslösen einer Impulssperre (STO), etc., durchgeführt werden.

Zwischenergebnisse und/oder Ergebnisse der Auswertungen können zwischen den zumindest zwei redundanten Berechnungspfaden verglichen werden. Es können auch die Messwerte und/oder für die Messwerte eindeutig zuordenbare Werte (z.B. Prüfsummen CRC32 oder andere Algorithmen wie SHA2, etc.) zwischen den zumindest zwei redundanten Berechnungspfaden verglichen werden.

Damit kann sichergestellt werden, dass die Berechnungen in den redundanten Berechnungspfaden keinem Fehler unterliegen. Unterscheiden sich die (Zwischen-)Ergebnisse der redundanten Berechnungspfade, so kann von einer Störung in einem Berechnungspfad ausgegangen werden. In diesem Fall kann eine Aktion ausgelöst werden.

Werden mehrere Messwerte mehrerer Sensoren durch die Berechnungseinheiten verarbeitet, so können die Messwerte der jeweiligen Sensoren zudem derart von der Auswerteeinheit verarbeitet werden, dass Fehler gemeinsamer Ursache ausgeschlossen werden können. Beispielsweise können aus den Messwerten ermittelte Sinussignale und Cosinussignale eines Sensors und/oder Messwerte von benachbart positionierten Sensoren von unterschiedlichen Berechnungseinheiten verarbeitet werden und/oder von unterschiedlichen Analog/Digital-Wandler in digitale Signale gewandelt werden.

Der Messwert kann mit einem Referenzwert, vorzugsweise mit einer Referenzkurve, verglichen werden um die sichere Position und/oder die sichere Geschwindigkeit und/oder die sichere Beschleunigung zu ermitteln.

Eine Transporteinheit weist Antriebsmagnete auf, welche ein für die Transporteinheit charakteristisches Magnetfeld entlang der Anordnung der Antriebsmagnete in Bewegungsrichtung abstrahlen. Dieses charakteristische Magnetfeld wird als Referenzkurve angesehen und kann vorab bekannt sein oder aufgezeichnet werden. Werden Magnetfeldwinkel und/oder Magnetfeldbeträge als Messwerte betrachtet, so wird also ein charakteristischer Verlauf des Magnetfeldwinkels und/oder des Magnetfeldbetrags als Referenzkurve verwendet.

Es kann vorab bekannte Information, vorzugsweise Information zur Anordnung der Antriebsmagnete und/oder zur Anordnung des Sensors, für die Berechnung der sicheren Position und/oder der sicheren Geschwindigkeit und/oder der sicheren Beschleunigung verwendet werden.

Es kann sich durch Betrachtung zumindest eines Messwerts von zumindest einem Sensor und Abgleich mit der Referenzkurve dennoch eine Mehrzahl an möglichen Positionen der Transporteinheit ergeben. Um diese möglichen Positionen zu reduzieren, kann vorab bekannte Information zur Eingrenzung der Kombinationsmöglichkeiten verwendet werden, wie es grundlegend in der AT 519 238 B1 beschrieben wird. Als vorab bekannte Information kann beispielsweise ein festgelegter typischer Abstand zwischen den Sensoren verwendet werden. Eine Analyse des Magnetfelds ist somit besonders gut möglich, wenn die Transporteinheit, und damit auch die Magnetplatten der Transporteinheit in einer definierten vorgegebenen Lage entlang des Stators geführt werden. Als Lage kann eine Ausrichtung der Magnetplatte, ein Abstand der Magnetplatte zum Stator, etc. angesehen werden. Da die Transporteinheiten ohnehin in einem definierten Abstand und in einer bekannten Ausrichtung am Stator geführt werden, ist diese Voraussetzung bezüglich der Lage üblicherweise gegeben. Damit kann eine Reduktion der notwendigen Rechenzeit erreicht werden, was insofern vorteilhaft ist, wenn die Überprüfung der Position/Geschwindigkeit rasch, vorzugsweise in Echtzeit erfolgen soll. Vorzugsweise werden die Messwerte aller aktiven Sensoren zur Ermittlung der sicheren Position der Transporteinheit verwendet. Um aktive Sensoren zu bestimmen, kann ermittelt werden, auf welche Sensoren ein ausreichend starkes Magnetfeld einwirkt. Werden alle aus aktiven Sensoren resultierenden Messwerte zur Ermittlung der sicheren Position, bzw. sicheren Geschwindigkeit, bzw. sicheren Beschleunigung verwendet, so ist eine besonders hohe Sicherheit gegeben, da eine Fehlfunktion eines Sensors mit einer hohen Wahrscheinlichkeit erkannt werden kann. Zudem ist durch eine größere Anzahl an Messwerten ein einfacherer Vergleich mit einer Referenzkurve möglich.

Es kann die sichere Position und/oder die sichere Geschwindigkeit und/oder die sichere Beschleunigung der Transporteinheit mit einem vorgegebenen Maximalwert verglichen werden und bei Überschreiten eine Aktion ausgelöst werden.

Es kann für die betreffende Transporteinheit ein sicheres Geschwindigkeitslimit (Safely Limited Speed) sichergestellt werden. So kann verhindert werden, dass die Geschwindigkeit der Transporteinheit ein vorgegebenes (globales oder abschnittsweises) Geschwindigkeitslimit überschreitet, was zu einer Gefährdung von Personen, z.B. durch Kollisionen mit Personen, Abheben einer Transporteinheit vom Stator in einer Kurve, etc., führen könnte.

Als Geschwindigkeit kann grundlegend nicht nur ein Betrag, sondern auch eine Richtung angesehen werden. Das bedeutet, dass die Richtung der bewegten Transporteinheit als Geschwindigkeit angesehen werden kann, womit also die Bewegungsrichtung der Transporteinheit sicher ermittelt werden kann.

Vorteilhafterweise wird die sichere Geschwindigkeit der Transporteinheit richtungsunabhängig ermittelt. Damit kann die Absolutgeschwindigkeit einer, mehrerer oder aller Transporteinheiten sicher ermittelt werden.

Vorzugweise wird die sicheren Position und/oder die sichere Geschwindigkeit und/oder die sichere Beschleunigung aller Transporteinheiten des Langstatorlinearmotors ermittelt. Es kann aber auch zunächst die höchste vorkommende Geschwindigkeit aller auf dem Stator befindlichen Transporteinheiten bestimmt werden und anschließend dieser Wert mit dem vorgegebenen Grenzwert vergleichen werden.

Damit kann beispielsweise für alle Transporteinheiten und damit für den gesamten Langstatorlinearmotor ein sicheres Geschwindigkeitslimit (Safely Limited Speed) realisiert werden.

Es kann eine Transporteinheit in einer Bewegungsrichtung entlang einer Transportstrecke bewegbar angeordnet sein, wobei eine an der Transporteinheit in Bewegungsrichtung angeordnete Mehrzahl an Antriebsmagneten ein Magnetfeld an der Transportstrecke erzeugt, wobei aus dem zumindest einen ersten Messwert eine auf die Transporteinheit wirkende Vortriebskraft und/oder eine auf die Transporteinheit wirkende sichere Normalkraft ermittelt werden.

Liefert der Sensor, z.B. ein Kraftsensor, direkt die Normalkraft und/oder Vortriebskraft, so kann die sichere Normalkraft und/oder sichere Vortriebskraft direkt gebildet werden, da der vom Sensor gelieferte Messwert aufgrund der Anwendung des erfindungsgemäßen Verfahrens als sicher angesehen werden kann.

Die Normalkraft und/oder Vortriebskraft kann auch aus einem gemessenen Spulenstrom ermittelt werden, wenn ein Stromsensor als erster Sensor dient. In diesem Fall ist ein Spulenstrom eine direkt physikalisch gemessene Größe des ersten Sensors, wobei die Normalkraft und/oder Vortriebskraft eine aus dem Spulenstrom abgeleitete Größe darstellt, welche als Messwert angesehen werden kann. Ist der Spulenstrom sicher, so kann die Normalkraft und/oder Vortriebskraft sicher errechnet werden. Es kann für die Ermittlung der Normalkraft und/oder Vortriebskraft je nach Sicherheitsvorgaben erforderlich sein, dass die gesamte Kette der Auswertung der Messwerte vom Sensor bis zu den verarbeitenden Prozessoren sicher ist, um auch eine sichere Kommunikation zwischen den jeweiligen Komponenten sicherzustellen.

Eine Vortriebskraft wirkt entlang der Transportstrecke in Bewegungsrichtung auf eine Transporteinheit. Wird eine Vortriebskraft als Messwert ermittelt, so kann als Grenzwert eine maximale/minimale Vortriebskraft vorgegeben sein. Damit kann sichergestellt werden, dass die ermittelte Vortriebskraft die maximale/minimale Vortriebskraft nicht überschreitet/unterschreitet.

Eine Normalkraft wirkt auf eine Transporteinheit normal in Richtung der Transportstrecke. Wird eine Normalkraft als Messwert ermittelt, so kann als Grenzwert eine minimale/maximale Normalkraft vorgegeben sein. Damit kann sichergestellt werden, dass die ermittelte Normalkraft die minimale/maximale Normalkraft nicht unterschreitet/überschreitet. Somit kann gewährleistet werden, dass die Transporteinheit sicher an der Transportstrecke haftet. Auch kann beispielsweise im Bereich einer Weiche, die an der Transportstrecke vorgesehen ist, die Normalkraft für eine korrekte Funktionsweise der Weiche ausreichend ist.

Es kann auch ein Verfahren zum sicheren Überwachen der Funktion eines Langstatorlinearmotors angegeben werden wobei am Langstatorlinearmotor eine Anzahl Sensoren angeordnet ist und die Anzahl Sensoren jeweils einen Messwert zur Steuerung des Langstatorlinearmotor erfassen, wobei eine zeitliche Änderungsrate des ersten Messwerts des ersten Sensors und/oder eine zeitliche Änderungsrate eines weiteren Messwertes eines weiteren Sensors mit einer maximalen zeitlichen Änderungsrate verglichen wird und bei einer Überschreitung der maximalen zeitlichen Änderungsrate ein Fehler festgestellt und eine Aktion ausgelöst wird. In diesem Verfahren wird der erste Messwert des ersten Sensors also nicht mit einem vorgegebenen Grenzwert verglichen.

Es kann auch ein Verfahren zum sicheren Überwachen der Funktion eines Langstatorlinearmotors angegeben werden wobei am Langstatorlinearmotor eine Anzahl Sensoren angeordnet ist und die Anzahl Sensoren jeweils einen Messwert zur Steuerung des Langstatorlinearmotor erfassen, wobei der erste Messwert des ersten Sensors und ein zusätzlicher Messwert eines zusätzlichen Sensors, vorzugsweise angrenzend an den ersten Sensor, verglichen und eine Differenz festgestellt werden, wobei bei einer Abweichung der festgestellten Differenz von einer vorgegebenen Differenz, vorzugsweise von einer vorgegebenen Differenz von Null, , ein Fehler festgestellt und eine Aktion ausgelöst wird. In diesem Verfahren wird der erste Messwert des ersten Sensors also nicht mit einem vorgegebenen Grenzwert verglichen.

Zudem kann ein Verfahren zum sicheren Überwachen der Funktion eines Langstatorlinearmotors angegeben werden, wobei am Langstatorlinearmotor eine Anzahl Sensoren, angeordnet ist und die Anzahl Sensoren jeweils einen Messwert zur Steuerung des Langstatorlinearmotor erfassen, eine Transporteinheit in einer Bewegungsrichtung entlang einer Transportstrecke bewegbar angeordnet ist, wobei eine an der Transporteinheit in Bewegungsrichtung angeordnete Mehrzahl an Antriebsmagneten ein Magnetfeld an der Transportstrecke erzeugt, wobei ein Messwert zumindest eines Sensors von der Position und/oder der Geschwindigkeit und/oder der Beschleunigung der Transporteinheit an der Transportstrecke abhängig ist, wobei aus dem zumindest einem Messwert eine sichere Position und/oder eine sichere Geschwindigkeit und/oder eine sichere Beschleunigung der Transporteinheit ermittelt wird. Diese Ermittlung der sicheren Position und/oder der sicheren Geschwindigkeit und/oder der sicheren Beschleunigung kann in zumindest zwei redundanten Berechnungspfaden einer Auswerteeinheit erfolgen. Vorteilhafterweise werden Zwischenergebnisse und/oder Ergebnisse der Auswertungen zwischen den zumindest zwei redundanten Berechnungspfaden verglichen. Es kann der zumindest eine Messwert mit einem Referenzwert, vorzugsweise einer Referenzkurve, verglichen werden um die sichere Position und/oder die sichere Geschwindigkeit und/oder die sichere Beschleunigung zu ermitteln, wobei vorab bekannte Information, vorzugsweise Information zur Anordnung der Antriebsmagnete und/oder zur Anordnung des zumindest einen Sensors, für die Berechnung der sicheren Position und/oder der sicheren Geschwindigkeit und/oder der sicheren Beschleunigung verwendet werden kann. Die sichere Position und/oder die sichere Geschwindigkeit und/oder die sichere Beschleunigung der Transporteinheit kann mit einem vorgegebenen Grenzwert verglichen werden, und bei Überschreiten eine Aktion ausgelöst werden. In diesem Verfahren wird der erste Messwert des ersten Sensors also nicht mit einem vorgegebenen Grenzwert verglichen.

Durch das erfindungsgemäße Verfahren können vorgegebene Sicherheitskriterien für den Langstatorlinearmotor oder einem Teil davon, z.B. ein Segment, erfüllt werden. Bei einer entsprechenden Festlegung dieser Sicherheitskriterien kann somit sichergestellt werden, dass ein Objekt oder Subjekt direkt mit dem Langstatorlinearmotor interagieren kann. Vorteilhafterweise wird die Funktion eines Langstatorlinearmotors überwacht, wenn sich ein Objekt oder Subjekt in einem vorgegebenen Sicherheitsbereich des Langstatorlinearmotors befindet oder einen vorgegebenen Arbeitsbereich des Langstatorlinearmotors verlässt. Damit finden die erfindungsgemäßen Sicherheitsfunktionen beispielsweise bei der Zusammenarbeit zwischen Mensch und einem Langstatorlinearmotor Anwendung. Dabei können Sicherheitsfunktionen wahlweise aktiviert und/oder deaktiviert werden, wenn sich Menschen in vorgegebenen Sicherheitsbereichen oder Arbeitsbereichen befinden. So können Sicherheitsfunktionen auch für Segmente der Transportstrecke, insbesondere bei der Anwesenheit von Menschen im Bereich dieser Segmente, aktivert/deaktiviert werden, wogegen in anderen Segmenten andere Sicherheitsfunktionen aktiv/inaktiv sind. Damit können also restriktivere Sicherheitsfunktionen für Segmente, in welchen beispielsweise Menschen anwesend sind, aktiviert werden, wogegen die restlichen Segmente weniger restriktive Sicherheitsfunktionen aufweisen.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 den Vergleich eines ersten Messwerts mit einem Grenzwert,
Fig.2 den Vergleich der Änderungsrate eines weiteren Messwerts mit einer maximalen Änderungsrate,
Fig.3 den Vergleich eines weiteren Messwertes mit einem zusätzlichen Messwert,
Fig.4 die Ermittlung einer sicheren Position/Geschwindigkeit/Beschleunigung,
Fig.5 einen Verlauf eines charakteristischen Magnetfeldwinkels und eines charakteristischen Magnetfeldbetrags als Referenzkurven,
Fig.6 eine Auswerteinheit mit zwei redundanten Berechnungspfaden.

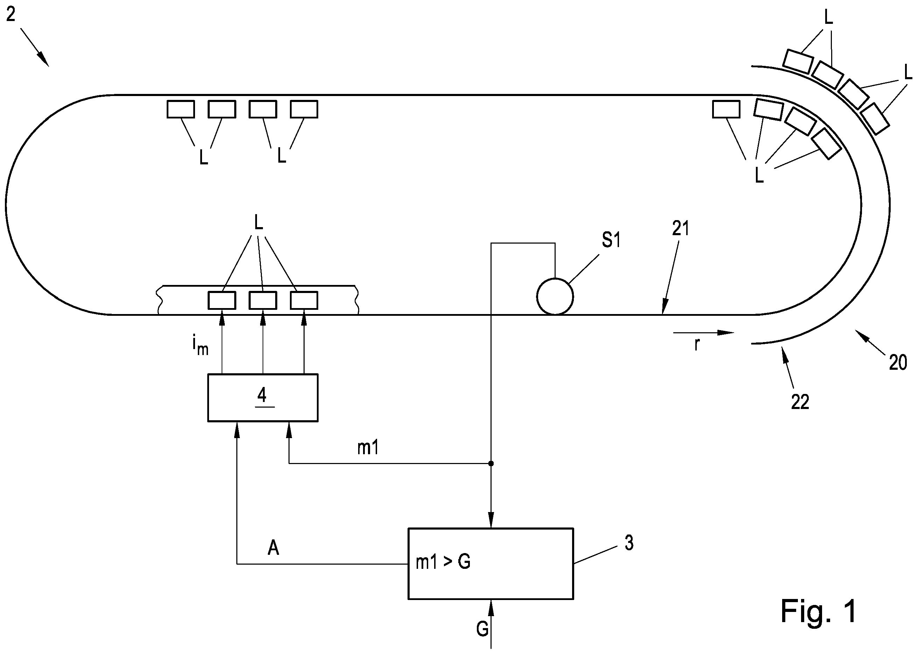

Fig.1, 2, 3, 4, 6 stellen jeweils einen Langstatorlinearmotor 2 mit einer Auswerteinheit 3 dar. Der Stator des Langstatorlinearmotors 2 ist dabei als geschlossene Transportstrecke 20 ausgeführt. Auf der Transportstrecke 20 sind eine Vielzahl von Antriebsspulen L in Bewegungsrichtung r einer Transporteinheit 1 hintereinander angeordnet, die im Normalbetrieb unter Kontrolle einer Steuereinheit 4 jeweils mit einem Spulenstrom iₘ bestromt werden, um ein bewegtes Magnetfeld zu erzeugen. Der Spulenstrom iₘ durch die jeweiligen Antriebsspulen L kann grundlegend von Antriebsspule L zu Antriebsspule L verschieden sein. Die Steuereinheit 4 kann als geeignete Hardware (auch dieselbe) und/oder als auf einer geeigneten Hardware laufenden Software ausgeführt sein. Die in Bewegungsrichtung r nebeneinander angeordneten Antriebsspulen L sind an einer ortsfesten Haltekonstruktion (in den Figuren nur angedeutet) an der Transportstrecke 20 angeordnet. Die Transportstrecke 20 kann dabei, je nach Anwendung und Bedarf, beliebig geformt sein und kann geschlossene und/oder offene Streckenabschnitte umfassen. Die Transportstrecke 20 muss nicht in einer Ebene liegen, sondern kann auch beliebig im Raum geführt sein. Es können je nach Aufbau der Transportstrecke 20, z.B.: bei einer vertikalen Transportstrecke 20 oder einem vertikalen Abschnitt der Transportstrecke 20 auch Sicherheitsfunktionen ausgeschlossen werden. Üblicherweise besteht eine Transportstrecke 20 aus mehreren zusammengesetzten Transportsegmenten mit jeweils einer Anzahl von Antriebsspulen L. Gleichfalls sind auch Weichen bekannt, um eine Transporteinheit 1 von einer ersten Transportstrecke 20 auf eine zweite Transportstrecke 20 zu führen. Es ist am Langstatorlinearmotor 2, z.B. am Stator, eine Anzahl Sensoren S1, S2, S3, S4 angeordnet. Als Sensor S1, S2, S3, S4 kann beispielsweise ein Magnetfeldsensor vorgesehen sein. Als Magnetfeldsensoren können Sensoren angesehen werden, welche eine Eigenschaft eines Magnetfeldes, messen, beispielsweise die Magnetfeldintensität (z.B. ein Hall-Sensor) oder die Richtung des Magnetfeldes (z.B. ein Magnetoresistiver Sensor).

Ebenso kann als Sensor S1, S2, S3, S4 ein Stromsensor, welcher den Spulenstrom iₘ durch eine Antriebsspule L bestimmt, dienen. Aus dem Spulenstrom iₘ kann bekanntermaßen eine auf eine Transporteinheit wirkende Normalkraft und/oder Vortriebskraft bestimmt werden.

Es ist erfindungsgemäß eine Auswerteeinheit 3 vorgesehen, welche zumindest einen Messwert m1 eines ersten Sensors S1 (in Fig. 1 ist nur ein erster Sensor S1 dargestellt) mit einem vorgegebenen Grenzwert G vergleicht. Somit wird der Messwert m1 des Sensors S1 beispielsweise auf Plausibilität geprüft und einer Abweichung des Messwerts m1 vom Zielwert G ein Fehler festgestellt und eine Aktion A ausgelöst. Als Aktion A kann beispielsweise ein Warnsignal ausgegeben werden und/oder in die Steuereinheit 4 des Langstatorlinearmotors eingegriffen werden, wie in den Fig. 1, 2, 3, 4, 6 angedeutet.

Der Sensor S1, bzw. die Sensoren S1, S2, S3, S4 sind zur Übertragung der Messwerte m1, m2, m3, m4 mit Steuerverbindungen mit der Steuereinheit 4 verbunden, wobei den Figuren die Steuerverbindungen auch mit der Auswerteeinheit 3 verbunden sind. Als Steuerverbindungen kann auch ein, vorzugsweise sicherer Bus vorgesehen sein. Vorzugweise können die Sensoren S1, S2, S3, S4 über eine eigene Auswerteverbindung, welche von der Steuerverbindung getrennt ausgeführt ist, mit der Auswerteeinheit 3 verbunden sein. Damit können die Messwerte m1, m2, m3, m4 separat über sichere Leitungen an die Auswerteeinheit 3 übertragen werden, womit eine höhere Sicherheit der Auswertung gewährleistet ist.

Als Messwert m1 kann eine Magnetfeldgröße, wie beispielsweise ein Magnetfeldwinkel α1 und/oder ein Magnetfeldbetrag A1 aufgenommen werden. Es kann als Messwert m1 auch eine Temperatur, ein Strom, etc. aufgenommen werden. Eine Temperatur kann beispielswese verwendet werden um Werte von Magnetfeldgrößen zu "korrigieren", wenn diese von der Temperatur beeinflusst werden. Ein Sensor S1 kann natürlich auch mehrere physikalische Größen als Messwerte m1 liefern, beispielsweise eine Magnetfeldgröße und eine Temperatur. Dabei kann natürlich auch eine aus der direkt physikalisch gemessenen Größe abgeleitete Größe als Messwert m1 angesehen werden.

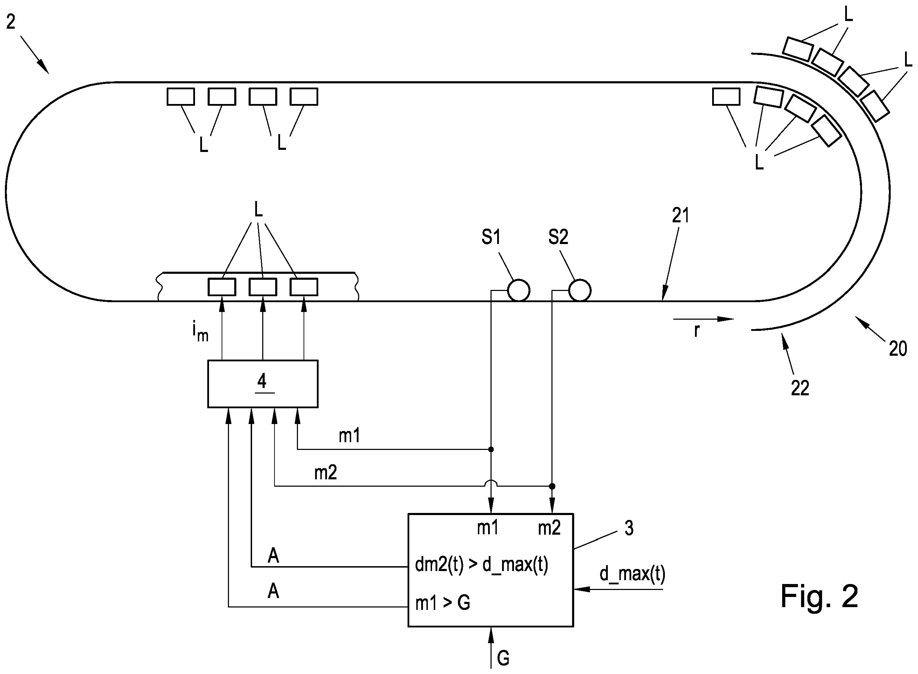

Es kann auch zusätzlich eine zeitliche Änderungsrate dm1(t) des ersten Messwerts m1 des ersten Sensors S1 und/oder eine zeitliche Änderungsrate dm2(t) eines weiteren Messwertes m2 eines weiteren Sensors S2 mit einer maximalen zeitlichen Änderungsrate d_max(t) verglichen werden. Bei einer Überschreitung der maximalen zeitlichen Änderungsrate d_max(t) wird ein Fehler festgestellt und eine Aktion A ausgelöst. Dies ist in Fig. 2 dargestellt.

Es kann somit beispielsweise für einen Magnetfeldwinkel α1 als Messwert m1 eine gewisse Kontinuität angenommen werden. Stellt der zumindest eine Sensor S1 beispielsweise einen Magnetfeldsensor dar, so kann eine zu hohe zeitliche Änderungsrate eines Magnetfeldwinkels α1 und/oder des Magnetfeldbetrags A1 den Schluss auf einen fehlerhaften Sensor S1 oder einen ein Fehler in der Verarbeitung zwischen dem Sensor und der Auswerteeinheit oder in der Auswerteeinheit, zulassen. Dabei ist als maximale Änderungsrate d_max(t) vorzugsweise die (physikalisch) maximal mögliche Änderungsrate vorgesehen. Es kann die Dynamik, d.h. eine zeitliche Änderungsrate dm1(t), dm2(t) des Messwerts m1, m2 betrachtet und mit einer vorgegebenen maximal möglichen Dynamik, d.h. der maximalen Änderungsrate d_max(t) verglichen werden. So kann beispielsweise für den Magnetfeldwinkel α1 eine maximal mögliche Änderungsrate, z.B. innerhalb einer Sicherheitsperiode ts, festgelegt werden. Wird in der Auswerteeinheit 3 eine Änderungsrate dm1(t), dm2(t) des Messwerts m1, m2 über der maximal möglichen erkannt, so kann auf einen Fehler geschlossen werden. Gleichermaßen kann eine zeitliche Änderungsrate dm1(t), dm2(t) des Magnetfeldbetrags A1 als Messgröße m1, m2 überprüft, mit der maximal möglichen Änderungsrate d_max(t) verglichen werden und bei Überschreitung auf einen Fehler geschlossen und eine Aktion A ausgelöst werden.

Es kann zudem der Fall eintreten, dass keine starken Temperaturänderungen zu erwarten sind. Daher kann auch ein Temperatursensor als Sensor S1 eine Temperatur als Messwert m1, m2 liefern und mit der maximal möglichen Änderungsrate dm1(t), dm2(t) der Temperatur verglichen werden. Gleiches ist natürlich auch mit anderen Messwerten m1, m2, wie beispielsweise Strömen möglich.

Es kann auch eine zeitliche Änderungsrate dm1(t) eines Messwerts m2 mit einer maximalen zeitlichen Änderungsrate d_max(t) verglichen werden, ohne den Messwert m1 mit einem Grenzwert G zu vergleichen. Bei einer Überschreitung der maximalen zeitlichen Änderungsrate d_max(t) wird in diesem Fall ebenso ein Fehler festgestellt und eine Aktion A ausgelöst. Es kann somit in diesem Fall in Fig. 2 der Sensor S1 und der Messwert m1 gestrichen werden und dennoch eine Sicherheitsfunktion sichergestellt werden.

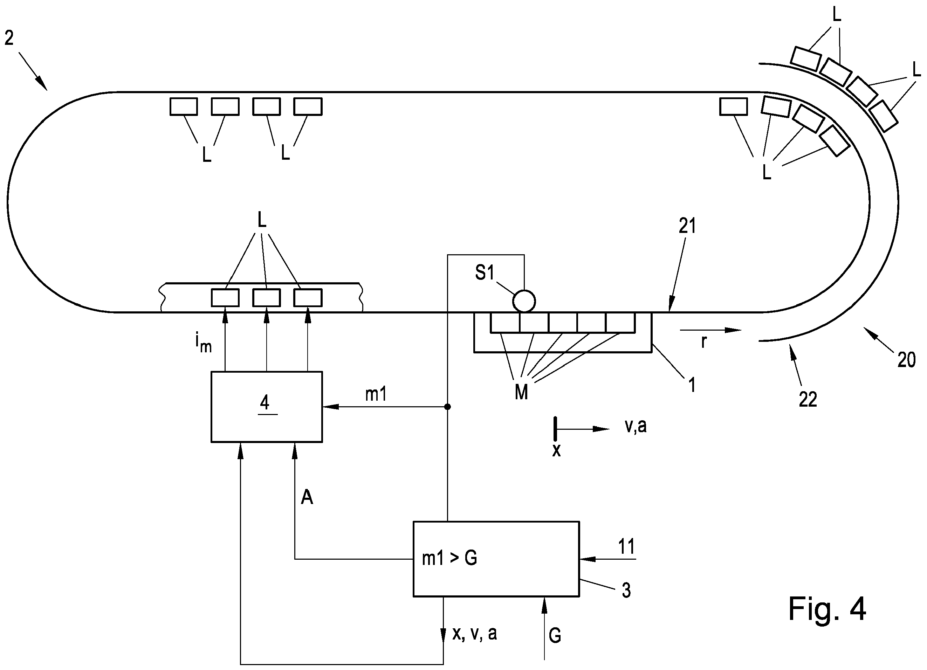

Es kann auch zusätzlich zum Vergleich des ersten Messwerts m1 des ersten Sensors S1 mit einem Grenzwert G der erste Messwert m1 des ersten Sensors S1 und/oder ein weiterer Messwert m3 eines weiteren Sensors S3 mit einem zusätzlichen Messwert m4 eines zusätzlichen Sensors S4 verglichen werden und bei einer Abweichung des ersten Messwerts m1 und/oder des weiteren Messwerts m3 vom zusätzlichen Messwert m4, vorzugsweise um eine Toleranz, in der Auswerteeinheit 3 ein Fehler festgestellt und eine Aktion A ausgelöst werden. In Fig. 4 wird der erste Messwert m1 des ersten Sensors S1 mit einem Grenzwert G verglichen und der weitere Messwert m3 des weiteren Sensors S3 mit dem zusätzlichen Messwert m4 des zusätzlichen Sensors S4 verglichen. Ein Vergleich der Messwerte m1, m3 mit zusätzlichen Messwerten m4 ist insbesondere dann vorteilhaft, wenn die jeweiligen Sensoren S1, S3 angrenzend zum zusätzlichen Sensor s4 positioniert sind, da hier ähnliche Messwerte m1, m3, m4 zu erwarten sind, z.B. ähnliche Temperaturen und/oder ähnliche Magnetfeldbeträge.

Sind Magnetfeldwinkel als Messwerte m1, m3, m4 vorhanden und sind die Magnetfeldwinkel von benachbarten Sensoren S1, S3 ähnlich, so können die Magnetfeldwinkel analog wie ähnliche Magnetfeldbeträge, Temperaturen, etc. behandelt werden. Sind die Magnetfeldwinkel von benachbarten Sensoren S1, S3 nicht ähnlich zueinander, so kann jedoch der Zusammenhang der Magnetfeldwinkel von benachbarten Sensoren S1, S3 bekannt sein, womit ausgehend von einem ersten Magnetfeldwinkel als erster Messwert m1 des ersten Sensors S1 auf einen zu erwartenden Magnetfeldwinkel als zu erwartenden weiteren Messwert eines benachbarten weiteren Sensors S3 geschlossen werden. Stimmt der weitere Messwert m3 mit dem erwarteten weiteren Messwert nicht überein, so kann auf einen Fehler geschlossen werden und eine Aktion ausgelöst werden.

Es kann auch ein Erwartungswert eines zusätzlichen Messwertes m4 eines zusätzlichen Sensors S4 auf Basis eines Messwerts m1, m3 des ersten Sensors S1 und/oder des weiteren Sensors S3 errechnet werden.

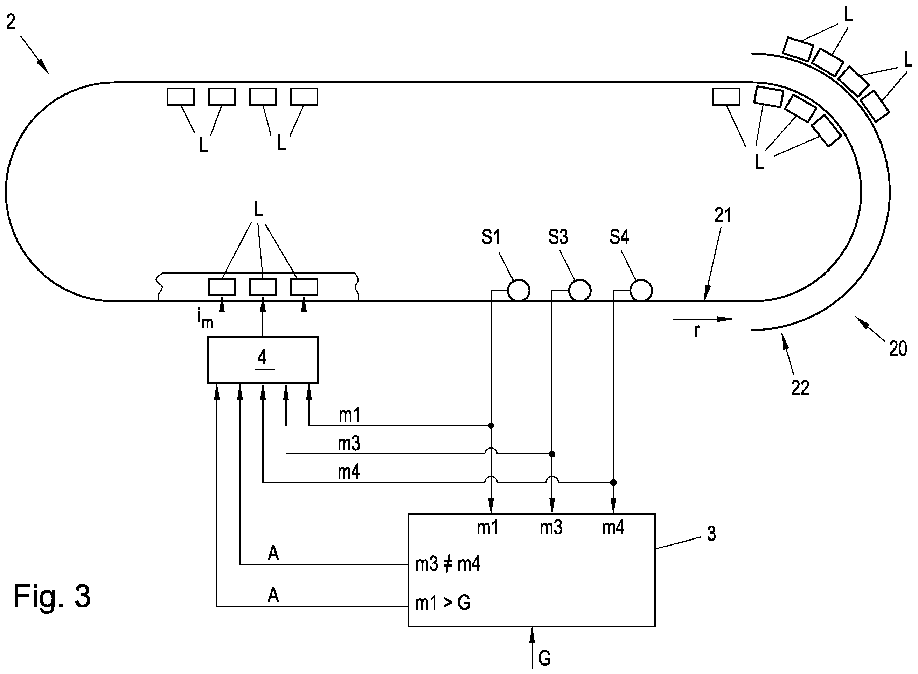

Es kann auch ein weiterer Messwert m3 eines Sensors S3 mit einem zusätzlichen Messwert m4 eines zusätzlichen Sensors S4 verglichen und eine Differenz festgestellt werden ohne den Messwert m1 mit einem Grenzwert G zu vergleichen. Bei einer Abweichung der festgestellten Differenz von einer vorgegebenen Differenz, vorzugsweise von einer vorgegebenen Differenz von Null, wird in diesem Fall ebenso ein Fehler festgestellt und eine Aktion A ausgelöst. Es kann somit in diesem Fall in Fig. 3 der Sensor S1 und der Messwert m1 gestrichen werden.

Die Auswerteeinheit 3 ist vorteilhafterweise mit allen Sensoren S1, S2, S3, S4 des Langstatorlinearmotors 2 verbunden und vergleicht jeweils die Messwerte m1, m2, m3, m4 mit jeweiligen Grenzwerten G und löst bei einer Abweichung eine Aktion A aus. Es kann auch eine Auswerteeinheit 3 für eine bestimmte Anzahl von Sensoren S1, S2, S3, S4, z.B. die Sensoren eines Segments, des Langstatorlinearmotors 2 bzw. vorgesehen sein.

An einem Langstatorlinearmotor 2 ist üblicherweise zumindest eine Transporteinheit 1 angeordnet, welche entlang der Transportstrecke 20 in der Bewegungsrichtung r bewegt werden kann. Dazu wird die zumindest eine Transporteinheit 1 auf geeignete Weise mit Führungselementen 21, 22 (nur schematisch in den Figuren angedeutet) an der stationär angeordneten Transportstrecke 20 in Bewegungsrichtung r geführt und gehalten. Die Führungselemente 21, 22 können sich dabei auf einer Seite der Transportstrecke 20 befinden oder auch an zwei Seiten. Eine Transporteinheit 1 weist entlang der Bewegungsrichtung r eine Anzahl seitlich angeordnete Antriebsmagnete M auf, wie in Fig. 3 dargestellt. Es können auch an der ersten Anzahl gegenüberliegenden Seite der Transporteinheit 1 seitlich angeordnete Antriebsmagnete M vorgesehen sein. Weist die Transporteinheit 1 an zwei Seiten Antriebsmagnete M auf, so können passend dazu an beiden Seiten der Transportstrecke 20 (in Bewegungsrichtung r gesehen) jeweils Antriebsspulen L vorgesehen sein, die mit den jeweiligen Antriebsmagnete M zusammenwirken um eine Bewegung der Transporteinheiten 1 zu verursachen. Zur Bewegung werden vorzugsweise nur die Antriebsspulen L im Bereich der Antriebsmagnete M von der Spulenregelung R mit Strom versorgt, wobei dieser Bereich auch Antriebspulen L umfassen kann, die sich vor und/oder nach der Transporteinheit 1 befinden. Selbstverständlich können entlang der Transportstrecke 20 auch mehr als eine Transporteinheit 1 bewegt werden, wobei jede Transporteinheit 1 durch entsprechendes Bestromen der Antriebsspulen L im Bereich der Transporteinheit 1 unabhängig von den anderen Transporteinheiten 1 (in Richtung, Position, Geschwindigkeit und Beschleunigung) bewegt werden kann, sofern ausreichend Abstand zwischen den Antriebsmagneten M der Transporteinheiten 1 vorhanden ist.

Es ist am Langstatorlinearmotor 2, vorzugsweise am Stator des Langstatorlinearmotors 2, wie erwähnt, eine Anzahl Sensoren S1, S2, S3, S4 angeordnet. Es können Messwerte m1, m2, m3 m4 der Sensoren S1, S2, S3, S4 von der Position der Transporteinheit 1 an der Transportstrecke 20 unabhängig, sein, insbesondere wenn die Temperatur als Messwert m1 m2, m3, m4 dient.

Es kann zumindest ein Messwert m1, m2, m3, m4 zumindest eines Sensors S1, S2, S3, S4 auch abhängig von der Position der Transporteinheit 1 sein. So können die Sensoren S1, S2, S3, S4 entlang der Transportstrecke 20 zur Bestimmung der Position x und/oder der Geschwindigkeit v und/oder der Beschleunigung a einer Transporteinheit 1 angeordnet sein. Hierzu können Positionssensoren, bzw. Geschwindigkeitssensoren, bzw. Beschleunigungssensoren als Sensoren S1, S2, S3, S4 vorgesehen sein, welche direkt die sichere Position x, bzw. sichere Geschwindigkeit v, bzw. sichere Beschleunigung a der Transporteinheit 1 an die Auswerteeinheit 3 als Messwert m1 liefern. Hierzu können die Messwerte m1, m2, m3, m4 der Sensoren S1, S2, S3, S4 beispielsweise mit Grenzwerten, und/oder mit weiteren Messwerten weiterer Sensoren S1, S2, S3, S4 verglichen werden und/oder die zeitlichen Änderungsraten dm1(t), dm2(t), dm3(t), dm4(t) von Messwerten m1, m2, m3, m4 der Sensoren S1, S2, S3, S4 mit vorgegebenen maximalen Änderungsraten d_max(t).

Es kann die sichere Geschwindigkeit v auch aus der sicheren Position x, bzw. dem zeitlichen Verlauf der sicheren Position x berechnet werden. Gleichermaßen kann die sichere Beschleunigung a auch aus der sicheren Geschwindigkeit v, bzw. dem zeitlichen Verlauf der sicheren Geschwindigkeit v ermittelt werden.

Als Sensoren S1, S2, S3, S4 können jedoch vorteilhafterweise auch Magnetfeldsensoren vorgesehen sein. Es kann somit ein von der Transporteinheit 1 verursachtes Magnetfeld als Messwert m1 an die Auswerteeinheit 3 geliefert werden, wobei die Auswerteeinheit eine Position x und/oder eine Geschwindigkeit v und/oder eine Beschleunigung a der Transporteinheit 1 berechnet. Um auf eigene, zusätzliche Positionsmagneten zur Verursachung des Magnetfelds an der Transporteinheit 1 verzichten zu können, können insbesondere die bereits vorhandenen Antriebsmagnete M der Transporteinheit zur Verursachung des Magnetfelds verwendet werden. Das Magnetfeld kann damit für die Bestimmung der sicheren Position x und/oder der sicheren Geschwindigkeit v, vorzugsweise in der Auswerteinheit 3 verwendet werden.

Der zumindest eine Messwert m1, m2, m3, m4 kann mit einem Referenzwert, vorzugsweise einer Referenzkurve 11, verglichen werden um die sichere Position x und/oder die sichere Geschwindigkeit v und/oder die sichere Beschleunigung a zu ermitteln. Für einen Abgleich des Messwerts m1, m2 mit der Referenzkurve 11 kann das bekannte Prinzip der Mustererkennung angewandt werden. In Fig. 4 ist eine Berechnung der sicheren Position x und/oder der sicheren Geschwindigkeit v und/oder der sicheren Beschleunigung a anhand eines Messwerts m1 eines Sensors S1 dargestellt.

Ein Magnetfeldsensor kann ein Magnetfeld in ein elektrisches Signal in Form z.B. eines sin/cos Signals umwandeln, wobei daraus wiederum über die atan- oder atan2-Winkelfunktion ein Magnetfeldwinkel α1 und über sqrt(sin²+cos²) ein Magnetfeldbetrag A1 ermittelt werden kann. Damit können charakteristische Magnetfeldwinkel α1 und Magnetfeldbetrag A1 einer Transporteinheit als Referenzkurve 11 angesehen werden. Der Verlauf der Referenzkurve 11, z.B. ein Verlauf eines Magnetfeldbetrags B und eines Magnetfeldwinkels α wiederholt sich auch für nebeneinander angeordnete Sensoren S1, S2, S3, S4 wenn die Transporteinheit entlang der Transportstrecke 20 bewegt wird. Dabei werden je nach Position stets unterschiedliche Gruppen von aufeinanderfolgenden Sensoren S1, S2 beeinflusst.

Es kann somit unter Verwendung eines Messwerts m1 unter Abgleich mit einer Referenzkurve 11 eine Bestimmung der sicheren Position x, bzw. Geschwindigkeit v, bzw. Beschleunigung a der Transporteinheit 1 erfolgen.

Die Referenzkurve 11 kann vorab auch aus den Messwerten m1, m2, m3, m4 eines Magnetfeldsensors S1, S2, S3, S4 ermittelt werden, indem eine Transporteinheit 1 entlang des Sensors S1, S2, S3, S4 bewegt wird und der Messwert m1, m2, m3, m4 aufgenommen wird.

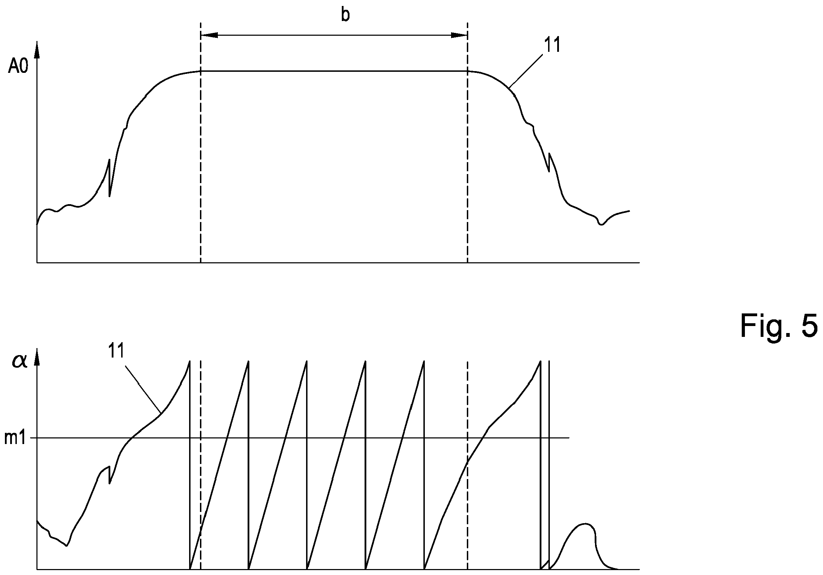

In Fig. 5 sind ein typischer Magnetfeldbetrag A0 und ein typischer Magnetfeldwinkel α über die Breite b einer Transporteinheit 1 (d.h. in Bewegungsrichtung r) dargestellt, wobei die Ränder der Transporteinheit 1 strichliert eingezeichnet sind. Wird von einer Breite b einer Transporteinheit 1 gesprochen, so ist natürlich immer die Breite über die Antriebsmagnete M der Transporteinheit 1 gemeint, da lediglich die Antriebsmagnete M das Magnetfeld hervorrufen und damit detektiert werden können. Es ist zudem ersichtlich, dass eine Transporteinheit 1 aufgrund von Streuprozessen ein Magnetfeld erzeugt, welches sich über die Breite b erstreckt. Damit kann eine Transporteinheit auch einen Einfluss auf einen Sensor S1, S2 haben kann, wenn sie sich nicht direkt über ihm befindet. Der typische Magnetfeldwinkel α und der typische Magnetfeldbetrag A können somit als Referenzkurven 11 dienen.

Da hier mehrere Antriebsmagnete M vorgesehen sind, beschreibt der Magnetfeldwinkel α einen Sägezahn. Jeder Sägezahn ist hier einer eindeutigen Lage eines Antriebsmagnets M relativ zum jeweilige Sensor S1, S2, S3, S4 zugeordnet. Es ist somit ersichtlich, dass sich die Sägezähne eines Magnetfeldwinkels α für einen Sensor S1, S2, S3, S4 mehrmals wiederholen. Wird nun ein Messwert m1 durch einen Sensor S1 aufgenommen, so kann durch Bestimmung des ersten gemessenen Magnetfeldwinkels α1 die sichere Position x, bzw. Geschwindigkeit v, bzw. Beschleunigung a der Transporteinheit 1 bestimmt werden, wenn der Messwert m1 einen eindeutigen Schluss zulässt. Dies kann beispielsweise durch Betrachtung des zeitlichen Verlauf des Messwerts ermöglicht sein.

Es kann für einen Messwert m1 der Fall eintreten, dass kein eindeutiger Schluss möglich ist. Wird als Messwert m1 der Magnetfeldwinkel α1 herangezogen, so detektiert ein Sensor S1, S2 für unterschiedliche Positionen der Transporteinheit 1 mehrmals denselben Magnetfeldwinkel α1, α2, da sich dieser aufgrund der Mehrzahl an Antriebsmagneten M an einer Transporteinheit 1, wiederholt, wie in Fig. 5 dargestellt. Somit kann ggf. ein Messwert m1 nicht eindeutig mit einer sicheren Position x, bzw. Geschwindigkeit v, bzw. Beschleunigung a verknüpfbar sein, insbesondere wenn nur der aktuelle Messwert m1 ohne den zeitlichen Verlauf betrachtet wird. So kann zusätzlich zum ersten Sensor S1 zumindest ein zweiter Sensor S2, vorzugsweise alle Sensoren S1, S2, S3, S4, die zu einem Zeitpunkt t einer Transporteinheit zugeordnet sind verwendet werden, um zusätzlich zum ersten Messwert m1 auch zumindest einen zweiten Messwert m2 zu erhalten. Eine Zuordnung von Sensoren S1, S2, S3, S4 zu einer Transporteinheit 1 kann dann beispielsweise festgestellt werden, wenn der von den jeweiligen Sensoren gelieferte Messwert mit der Änderung der Position der Transporteinheit 1 variiert.

Daraus werden beispielsweise mehrere (z.B. zwei) Magnetfeldwinkel α1, α2, mehrerer (z.b. zweier) Sensoren S1, S2 bestimmt und gesamtheitlich betrachtet und mit der Referenzkurve 11 verglichen, womit eine sichere Position x, bzw. Geschwindigkeit, bzw. Beschleunigung a der Transporteinheit 1 bestimmt werden kann.

Es kann bei Verwendung eines Messwerts m1 eines Sensors S1, aber auch bei Verwendung einer Mehrzahl an Messwerten m1, m2 mehrerer Sensoren S1, S2 der Fall eintreten, dass durch die Kombination der Messwerte m1, m2 noch keine eindeutige Bestimmung der sicheren Position, bzw. Geschwindigkeit v, bzw. Beschleunigung möglich ist - wenn durch eine Zusammenschau der Messwerte m1, m2 mehrere Positionen der Transporteinheit 1 möglich sind. Insbesondere eine Verwendung zweier Messwerte m1, m2 kann oftmals nicht ausreichend sein.

Um dieses Problem zu beheben, kann auch vorab bekannte Information, vorzugsweise Information zur Anordnung der Antriebsmagnete M und/oder zur Anordnung des Sensors S1, für die Berechnung der sicheren Position x und/oder der sicheren Geschwindigkeit v und/oder der sicheren Beschleunigung a verwendet werden. Es sei an dieser Stelle auf die AT 519 238 B1 verwiesen, welche ein Verfahren zur initialen Positionserkennung offenbart. Es wird in dieser Druckschrift auch gezeigt, wie vorab bekannte Information für die Bestimmung der Position verwendet werden kann. Im Gegensatz zur AT 519 238 B1 wird in der gegenständlichen Erfindung jedoch nicht eine initiale Position der Transporteinheit 1 bestimmt, sondern eine sichere Position x, bzw. eine sichere Geschwindigkeit v, bzw. eine sichere Beschleunigung a.

So kann beispielsweise ausgehend den Messwerten m1 des ersten Sensors S1 unter Betrachtung der Referenzkurve 11 und der Abstände zu einem benachbarten zweiten Sensors S2 geprüft werden, ob der weitere Messwert m2 des zweiten Sensors mit dem erwarteten (aus der Referenzkurve 11) ermittelten Wert übereinstimmt. Es kann als erster Sensor S1 der Sensor gewählt werden, welcher am ehesten an der Mitte der Anordnung der Antriebsmagnete M, da in diesem Bereich der Verlauf der Feldlinien des Magnetfeldes der Antriebsmagnete M günstiger verläuft. So können ausgehend vom ersten Messwert m1 des mittig positionierten Sensors S1 unter Verwendung der Referenzkurve 11 der zweite Messwert m2 des zweiten Sensors S2 geprüft werden um eine sichere Position x der Transporteinheit 1 zu bestimmen, ggf. unter Verwendung vorab bekannter Information.

Es können auch die Messwerte m1, m2, m3, m4 aller aktiven Sensoren S1, S2, S3, S4 verwendet werden und mit der Referenzkurve 11 verglichen werden. Um die aktiven Sensoren S1, S2, S3, S4 zu erkennen, kann ermittelt werden, auf welche Sensoren S1, S2, S3, S4 ein ausreichend starkes Magnetfeld einwirkt.

Die Ermittlung der sicheren Position x und/oder der sicheren Geschwindigkeit v und/oder der sicheren Beschleunigung a kann in der Auswerteeinheit 3 in zumindest zwei redundanten Berechnungspfaden erfolgen, wobei Zwischenergebnisse und/oder Ergebnisse der Auswertungen zwischen den Berechnungspfaden verglichen werden können. In Fig. 5 sind die redundanten Berechnungspfade als parallele Berechnungseinheiten B1, B2 ausgeführt, wobei ein Vergleich von Zwischenergebnissen und/oder Ergebnissen der Auswertungen durch einen Doppelpfeil zwischen den Berechnungseinheiten B1, B2 angedeutet ist. Bei Abweichungen kann eine Aktion A ausgelöst werden (beim Doppelpfeil angedeutet), da auf einen Fehler bei der Auswertung des Messwerts m1 geschlossen werden kann.

Die sichere Position x und/oder die sichere Geschwindigkeit v und/oder die sichere Beschleunigung a der Transporteinheit 1 kann mit einem vorgegebenen Maximalwert v_max verglichen, und bei Überschreiten eine Aktion A ausgelöst werden. So kann beispielsweise die sichere Geschwindigkeit v mit einer Maximalgeschwindigkeit v_max verglichen werden.

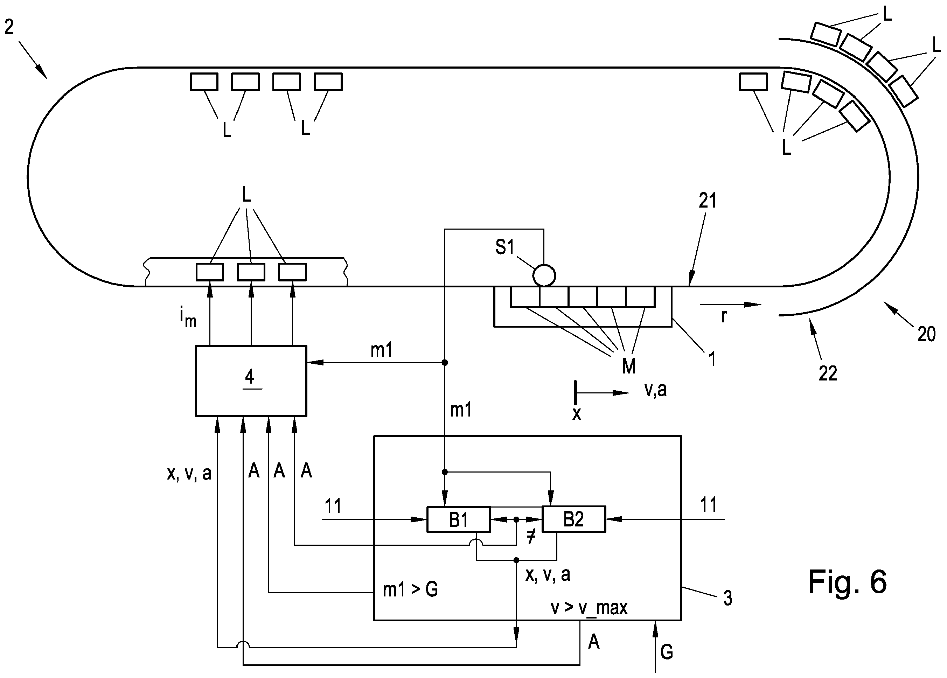

Wird beispielsweise der Maximalwert v_max durch die sichere Geschwindigkeit v der Transporteinheit 1 überschritten, so kann durch die Auswerteeinheit 3 eine Aktion A ausgelöst werden, wie ebenso in Fig. 6 dargestellt.

Es kann die sicheren Position x und/oder die sichere Geschwindigkeit v und/oder die sichere Beschleunigung a aller Transporteinheiten 2 des Langstatorlinearmotors 1 ermittelt werden. Werden z.B. die sicheren Geschwindigkeiten v aller am Langstatorlinearmotor 2 befindlichen Transporteinheiten 1 mit dem Maximalwert v_max verglichen, so kann bei Überschreitung beispielsweise eine Impulssperre (STO) ausgelöst werden, womit ein sicheres Geschwindigkeitslimit (SLS) der Transporteinheiten 1 realisiert wird. Es kann auch zunächst die höchste vorkommende Geschwindigkeit aller sich auf dem Stator des Langstatorlinearmotors 1 befindlichen Transporteinheiten 2 bestimmt werden und anschließend dieser Wert mit einem einen vorgegebenen Grenzwert vergleichen werden.

Analog zur oben beschriebenen Ermittlung und Verarbeitung der sicheren Position x, Geschwindigkeit v und Beschleunigung a kann die sichere Normalkraft und/oder sichere Vortriebskraft einer oder aller am Langstatorlinearmotor 2 befindlichen Transporteinheiten 2 direkt aus einem sicheren Messwert m1 ergehen oder aus einem Messwert m1 sicher errechnet werden.

Der Messwert m1 kann ebenso wie beschrieben weiter verarbeitet werden um eine sichere Normalkraft und/oder sichere Vortriebskraft zu erhalten.

So sind vorzugsweise in einer Auswerteeinheit 3 zwei redundante Berechnungspfade B1, B2 zur Ermittlung der sicheren Normalkraft und/oder sicheren Vortriebskraft vorgesehen. Es können ebenso wie oben beschrieben Zwischenergebnisse und/oder Ergebnisse der Auswertungen zwischen den zumindest zwei redundanten Berechnungspfaden B1, B2 verglichen werden. Auch ein Vergleich des zumindest einen Messwerts m1 mit einem Referenzwert, vorzugsweise einer Referenzkurve 11, kann erfolgen, um die sichere Normalkraft und/oder sichere Vortriebskraft zu ermitteln. Weiters kann die sichere Normalkraft und/oder sichere Vortriebskraft mit einem vorgegebenen Maximalwert/Minimalwert verglichen werden, und bei Überschreiten/Unterschreiten eine Aktion A ausgelöst werden.

Bezugnehmend auf Fig. 4 und 6 sei erwähnt, dass natürlich auch eine sichere Position x und/oder sichere Geschwindigkeit v und/oder eine sichere Beschleunigung a berechnet werden ohne den Messwert m1 des ersten Sensors S1 mit einem Grenzwert G zu vergleichen

Es kann auch betrachtet werden, ob nebeneinander angeordnete Sensoren S1, S2, S3, S4 sinnhafterweise aktiv sind. Ein Sensor S1, S2, S3, S4 gilt beispielsweise als aktiv, wenn der zugehörige Messewert m1, m2, m3, m4 einen bestimmen Messwert z.B. einen gewissen Magnetfeldbetrag, erreicht, bzw. überschreitet. Üblicherweise detektiert ein Sensor S1, S2, S3, S4 ein Magnetfeld, wenn sich die Antriebsmagnete M einer Transporteinheit 1 über dem bzw. in der Umgebung des Sensors S1, S2, S3, S4 befinden. Grundlegend muss jedoch auf Streufelder der Antriebsmagnete M Rücksicht genommen werden, welche insbesondere auf vor oder nach der Transporteinheit 1 befindliche Sensoren S1, S2, S3, S4 wirken können. Dies kann beispielsweise über eine festgelegte Toleranz bezüglich der Abweichung des erwarteten vom gemessenen Magnetfeld berücksichtigt werden.

Die Aktivität, insbesondere nebeneinanderliegender, Sensoren S1, S2, S3, S4 kann somit mit vorgegebenen Mustern verglichen werden um einen Plausibilitätscheck durchzuführen. So kann die (Nicht-)Aktivität eines ersten Sensors S1 als erster Messwert m1 und die (Nicht-)Aktivität eines zusätzlichen Sensors S4 als zusätzlicher Messwert m4 in Fig. 3 betrachtet werden. Aufgrund von bekannten Ausdehnungen von Transporteinheiten 1 über mehrere Sensoren S1, S4, kann davon ausgegangen werden, dass eine bestimmte Anzahl an Sensoren S1, S4 in Serie aktiv sein muss. Deckt eine Transporteinheit 1 etwa zwei Sensoren S1, S2 ab, dann müssen immer mindestens zwei aufeinanderfolgende Sensoren S1, S2 aktiv sein. Ist nur ein isolierter Sensor S1, S2 aktiv, und seine beiden benachbart angeordneten Sensoren S1, S2 nicht, so kann beispielsweise auf einen Fehler im isolierten Sensor oder in einem benachbarten Sensor S1, S2 geschlossen werden.

Auch kann eine Änderung des Status der Aktivität von Sensoren S1, S2 auf Plausibilität geprüft werden. Es ist davon auszugehen, dass Sensoren S1, S2 jeweils in Gruppen entlang der Bewegungsrichtung r aktiviert werden. Das bedeutet, dass ein Sensor S1, S2 nur aktiv werden kann, wenn zuvor ein benachbarter Sensor S1, S2 aktiv war.

Bei einer geeigneten geometrischen Anordnung der Sensoren S1, S2 und Antriebsmagnete M kann beispielsweise die Annahme getroffen werden, dass ein Sensor S1, S2 nur zu einem Zeitpunkt aktiv werden darf, wenn einer der umliegenden benachbarten Sensoren S1, S2 vor diesem Zeitpunkt aktiv war und er es zu diesem Zeitpunkt noch ist. Umgekehrt kann die Annahme getroffen werden, dass ein Sensor S1, S2 zu einem Zeitpunkt nur dann inaktiv werden kann, wenn einer der umliegenden benachbarten Sensoren vor diesem Zeitpunkt aktiv war und es zu diesem Zeitpunkt auch noch ist. Wird diese Annahme nicht erfüllt, so kann auf einen Fehler geschlossen werden.

Es kann zudem analysiert werden, ob ein aktiver Sensor S1, S2, S3, S4 tatsächlich durch eine Transporteinheit 1 ein Magnetfeld erfährt. Es kann in diesem Fall analysiert werden, welche Sensoren S1, S2, S3, S4 zwar aktiv sind, auf deren Position sich jedoch gar keine Transporteinheit 1 befindet. Misst ein Sensor S1, S2, S3, S4 ein Magnetfeld, obwohl er gar nicht aktiv sein sollte, so kann davon ausgegangen werden, dass ein Fehler vorliegt.

Es kann natürlich je nach detektiertem Fehler, d.h. Grenzwertüberschreitung oder Grenzwertunterschreitung des ersten Messwerts m1, Überschreitung der maximalen zeitlichen Änderungsrate dm1, dm2 eines Messwerts m1, m2, Abweichung der Messwerte m1, m2, m3, m4 verschiedener Sensoren S1, S2, S3, S4, Fehler bei der Berechnung der sicheren Position x / sicheren Geschwindigkeit v / sicheren Beschleunigung a, oder bei einer Überschreitung eines Maximalwertes v_max durch die sichere Position a /sichere Geschwindigkeit v / sichere Beschleunigung a, eine unterschiedliche Aktion A ausgelöst werden, auch wenn alle Aktionen in den Figuren als A bezeichnet sind und auf die Steuereinheit 4 zugreifen.

## Patentansprüche

1. Verfahren zum sicheren Überwachen der Funktion eines Langstatorlinearmotors (2), wobei am Langstatorlinearmotor (2) eine Anzahl Sensoren (S1, S2, S3, S4), angeordnet ist und die Anzahl Sensoren (S1, S2, S3, S4) jeweils einen Messwert (m1, m2, m3, m4), der zur Steuerung des Langstatorlinearmotor (2) geeignet ist, erfassen, **dadurch gekennzeichnet, dass** zumindest ein erster Messwert (m1) eines ersten Sensors (S1) mit einem vorgegebenen Grenzwert (G) verglichen wird, **und dass** bei einer Kreuzung des Grenzwerts (G) durch den ersten Messwert (m1) ein Fehler festgestellt und eine Aktion (A) ausgelöst wird.

2. Verfahren nach Anspruch 1, **dadurch gekennzeichnet, dass** eine zeitliche Änderungsrate (dm1(t)) des ersten Messwerts (m1) des ersten Sensors (S1) und/oder eine zeitliche Änderungsrate (dm2(t)) eines weiteren Messwertes (m2) eines weiteren Sensors (S2) mit einer vorgegebenen maximalen zeitlichen Änderungsrate (d_max(t)) verglichen wird, **und dass** bei einer Überschreitung der maximalen zeitlichen Änderungsrate (d_max(t)) ein Fehler festgestellt und eine Aktion (A) ausgelöst wird.

3. Verfahren nach Anspruch 1, **dadurch gekennzeichnet, dass** der erste Messwert (m1, T1) des ersten Sensors (S1) und/oder ein weiterer Messwert (m3) eines weiteren Sensors (S3) mit einem zusätzlichen Messwert (m4) eines zusätzlichen Sensors (S4) verglichen und eine Differenz festgestellt wird, **und dass** bei einer Abweichung der festgestellten Differenz von einer vorgegebenen Differenz, vorzugsweise von einer vorgegebenen Differenz von Null, ein Fehler festgestellt und eine Aktion (A) ausgelöst wird.

4. Verfahren nach Anspruch 3, **dadurch gekennzeichnet, dass** der zusätzliche Sensor (S4) angrenzend zum ersten Sensors (S1) und/oder weiteren Sensors (S3) positioniert ist.

5. Verfahren nach Anspruch 3 oder 4, **dadurch gekennzeichnet, dass** eine Aktivität des ersten Sensors (S1) als erster Messwert (m1) und/oder eine Aktivität eines weiteren Sensors (S3) als weiterer Messwert (m3) bestimmt wird und eine Aktivität des zusätzlichen Sensors (S4) als zusätzlicher Messwert (m4) bestimmt wird.

6. Verfahren nach einem der Ansprüche 1 bis 5, **dadurch gekennzeichnet, dass** die Aktion (A) eine Ausgabe eines Warnhinweises und/oder einen Eingriff in die Steuerung umfasst.

7. Verfahren nach einem der Ansprüche 1 bis 6, **dadurch gekennzeichnet, dass** eine Transporteinheit (1) in einer Bewegungsrichtung (r) entlang einer Transportstrecke (20) bewegbar angeordnet ist, wobei eine an der Transporteinheit (1) in Bewegungsrichtung (r) angeordnete Mehrzahl an Antriebsmagneten (M) ein Magnetfeld an der Transportstrecke (20) erzeugt, **und dass** zumindest ein Messwert (m1, m2, m3, m4) zumindest eines Sensors (S1, S2, S3, S4) von der Position und/oder der Geschwindigkeit und/oder der Beschleunigung der Transporteinheit (1) an der Transportstrecke (20) abhängig ist.

8. Verfahren nach Anspruch 7, **dadurch gekennzeichnet, dass** aus dem zumindest einen Messwert (m1, m2, m3, m4) eine sichere Position (x) und/oder eine sichere Geschwindigkeit (v) und/oder eine sichere Beschleunigung (a) der Transporteinheit (1) ermittelt wird.

9. Verfahren nach Anspruch 8, **dadurch gekennzeichnet, dass** eine Ermittlung der sicheren Position (x) und/oder der sicheren Geschwindigkeit (v) in zumindest zwei redundanten Berechnungspfaden (B1, B2) einer Auswerteeinheit (3) erfolgt.

10. Verfahren nach Anspruch 9, **dadurch gekennzeichnet, dass** Zwischenergebnisse und/oder Ergebnisse der Auswertungen zwischen den zumindest zwei redundanten Berechnungspfaden (B1, B2) verglichen werden.

11. Verfahren nach einem der Ansprüche 8 bis 10, **dadurch gekennzeichnet, dass** der zumindest eine Messwert (m1, m2, m3, m4) mit einem Referenzwert, vorzugsweise einer Referenzkurve (11), verglichen wird um die sichere Position (x) und/oder die sichere Geschwindigkeit (v) und/oder die sichere Beschleunigung (a) zu ermitteln.

12. Verfahren nach Anspruch 11, **dadurch gekennzeichnet, dass** vorab bekannte Information, vorzugsweise Information zur Anordnung der Antriebsmagnete (M) und/oder zur Anordnung des zumindest einen Sensors (S1, S2, S3, S4), für die Berechnung der sicheren Position (x) und/oder der sicheren Geschwindigkeit (v) und/oder der sicheren Beschleunigung (a) verwendet wird.

13. Verfahren nach einem der Ansprüche 8 bis 12, **dadurch gekennzeichnet, dass** die sichere Position (x) und/oder die sichere Geschwindigkeit (v) und/oder die sichere Beschleunigung (a) der Transporteinheit (2) mit einem vorgegebenen Maximalwert (v_max) verglichen wird, und bei Überschreiten eine Aktion (A) ausgelöst wird.

14. Verfahren nach einem der Ansprüche 8 bis 13, **dadurch gekennzeichnet, dass** die sicheren Position (x) und/oder die sichere Geschwindigkeit (v) und/oder die sichere Beschleunigung (a) aller Transporteinheiten (2) des Langstatorlinearmotors (1) ermittelt wird.

15. Verfahren nach einem der Ansprüche 1 bis 7, **dadurch gekennzeichnet, dass** eine Transporteinheit (1) in einer Bewegungsrichtung (r) entlang einer Transportstrecke (20) bewegbar angeordnet ist, wobei eine an der Transporteinheit (1) in Bewegungsrichtung (r) angeordnete Mehrzahl an Antriebsmagneten (M) ein Magnetfeld an der Transportstrecke (20) erzeugt, **und dass** aus dem zumindest einen ersten Messwert (m1) eine auf die Transporteinheit (1) wirkende Vortriebskraft und/oder eine auf die Transporteinheit (1) wirkende sichere Normalkraft ermittelt wird.

16. Verfahren nach einem der Ansprüche 1 bis 15, **dadurch gekennzeichnet, dass** die Funktion des Langstatorlinearmotors (2) überwacht wird, wenn sich ein Objekt oder Subjekt in einem vorgegebenen Sicherheitsbereich des Langstatorlinearmotors (2) befindet oder einen vorgegebenen Arbeitsbereich des Langstatorlinearmotors (2) verlässt.

17. Langstatorlinearmotor (2), an dem eine Anzahl Sensoren (S1, S2, S3, S4), angeordnet ist, die mit einer Steuereinheit (3) Langstatorlinearmotors (2) verbunden sind, und ausgestaltet sind einen Messwert (m1, m2, m3, m4) des Langstatorlinearmotor (2) zu erfassen und an die Steuereinheit (3) zu übertragen, **dadurch gekennzeichnet, dass** eine Auswerteeinheit (3) vorgesehen ist, die ausgestaltet einen ersten Messwert (m1) eines ersten Sensors (S1) mit einem vorgegebenen Grenzwert (G) zu vergleichen und bei einer Kreuzung des Messwerts (m1) einen Fehler festzustellen und eine Aktion (A) auszulösen.
